# EUROPÄISCHE PATENTSCHRIFT

(11) **EP 1 532 033 B1**
(45) Veröffentlichungstag und Bekanntmachung des Hinweises auf die Patenterteilung: **08.07.2009**
(21) Anmeldenummer: 03794923.7
(22) Anmeldetag: 22.08.2003
(51) Int. Cl.: B61F 1/00

(54) **TRIEBGESTELL FÜR EIN SCHIENENFAHRZEUG**
DRIVEN BOGIE FOR A RAIL VEHICLE
BOGIE MOTEUR POUR UN VEHICULE SUR RAILS

(30) Priorität: 26.08.2002 DE 10239957
(43) Veröffentlichungstag der Anmeldung: 25.05.2005
(73) Patentinhaber: Bombardier Transportation GmbH, 10785 Berlin (DE)
(72) Erfinder: STARCK, Günter, 8542 Wiesendangen (CH); LUZI, Armin, 8542 Wiesendangen (CH); KRAUTZIG, Steffen, 8405 Winterthur (CH)
(74) Vertreter: Cohausz & Florack
(86) Internationale Anmeldenummer: PCT/EP2003/009342
(87) Internationale Veröffentlichungsnummer: WO 2004/024530

(56) Entgegenhaltungen:
- EP-A- 0 589 865
- EP-A- 0 857 636
- EP-A- 0 873 929
- DE-A- 1 806 820
- DE-A- 19 958 445

## Beschreibung

Die vorliegende Erfindung betrifft ein Triebdrehgestell für ein Schienenfahrzeug, insbesondere ein Schienenfahrzeug mit veränderbarer Spurweite, mit einer Rahmeneinrichtung und wenigstens zwei durch eine Antriebseinrichtung angetriebenen Radeinheiten, an denen die Rahmeneinrichtung abgestützt ist.

Bei heutigen Schienenfahrzeugen besteht aufgrund der Bestrebung, möglichst große Transportkapazitäten zur Verfügung zu stellen, in der Regel das Bedürfnis, den im Fahrzeug zur Verfügung stehenden Raum in möglichst geringem Umfang durch Antriebs- oder Fahrwerkskomponenten zu blockieren. Zudem steht im Fahrwerksbereich nicht zuletzt aufgrund eines immer komplexer werdenden Aufbaus immer weniger Bauraum zur Verfügung.

Besonders drastisch stellt sich dieses Problem bei Schienenfahrzeugen mit veränderbarer Spurweite dar. So gibt es neben dem verbreiteten Schienennetz mit Normalspur 1435 mm im Vollbahnbereich auch Länder mit abweichender Spurweite, wie dies z. B. bei Russland der Fall ist. Darüber hinaus gibt es Beispiele, bei denen innerhalb desselben Landes verschiedene Spurweiten verlegt sind, wie dies z. B. in Spanien der Fall ist. Schon früh wurden dort Schienenfahrzeuge mit variabler Spurweite sowie an den Netzgrenzen fest installierte, automatische, überrollbare Spurwechseleinrichtungen als kostengünstige und im Betrieb Zeit sparende Variante zum Drehgestell- oder Triebfahrzeugtausch eingeführt. Eine solche Spurwechseleinrichtung ist beispielsweise in dem Artikel "Talgo BT - Ein Diesel-Triebkopf mit variabler Spurweite" beschrieben (in ZEV+DET Glas. Ann 124 (2000) 2/3. 92-102).

Waren derartige Fahrwerkskonstruktionen aus Gründen der reduzierten Komplexität zunächst auf nicht angetriebene Laufdrehgestelle beschränkt, wobei sie sich im Betriebseinsatz als sicher und robust erwiesen, so wurden vor einiger Zeit auch gattungsgemäße angetriebene Fahrwerke mit Spurwechseleinrichtungen eingeführt, wie dies dem oben genannten Artikel ebenfalls zu entnehmen ist.

Ein solches Triebdrehgestell ist im Übrigen auch der europäischen Patentschrift EP 0 770 013 B1 zu entnehmen. Das darin beschriebene Triebdrehgestell zeichnet sich dadurch aus, dass anstelle von Radsätzen mit starrer durchgehender Achse nun auf Achsstummeln sitzende, einzeln aufgehängte Räder zum Einsatz kommen. welche komplett verschoben werden. Gegenüber einer älteren Idee von auf ihren Achsen zu verschiebenden Rädern vermeidet dies eine Reihe technischer und sicherheitsrelevanter Probleme.

Die durch die Verwendung von Einzelrädern auf Achsstummeln bedingte Notwendigkeit, unter dem eigentlichen Drehgestellrahmen separate Einzelradlaufwerke anzubringen, die gegebenenfalls durch sogenannte Achsbrücken miteinander verbunden sind, bewirkt zusammen mit dem für den Verschiebeweg der Räder benötigten freien Bereich, dass im Fahrwerk nunmehr sehr beschränkter Bauraum für Antrieb und Bremse zur Verfügung stehen.

Dies führte bei der in EP 0 770 013 B1 dargestellten Lösung zur Anordnung der Fahrmotoren im bzw. am Wagenkasten mit einem Antrieb der Räder über vergleichsweise lange, Iängsverschiebbare Gelenkwellen sowie einer Anordnung der Bremseinrichtung außerhalb des Fahrwerks als separate, ebenfalls über Gelenkwellen mit dem Antrieb gekoppelte Einheit. Mag dies für Einheiten mit nur einem angetriebenen Drehgestell noch akzeptabel sein, stellt diese Lösung jedoch hinsichtlich der Bruchgefährdung der die Bremseinrichtung ankoppelnden Gelenkwelle ein Sicherheitsproblem dar.

Für Triebfahrzeuge mit deutlich gesteigerter Leistung, insbesondere für den Einsatz im Hochgeschwindigkeitsverkehr, für den zwei angetriebene Fahrwerke benötigt werden, führt eine derartige Lösung zu einem unerwünscht hohen Bauraumbedarf im Wagenkasten für die Unterbringung der Antriebsmotoren, der Bremseinrichtungen und der Koppelgestänge zu den im Fahrwerk liegenden Getrieben. Ein solcher Aufwand ist technisch und wirtschaftlich nicht mehr sinnvoll. Zudem sind derartige Antriebskonfigurationen in Folge ihres hohen Anteils an rotierenden Massen für höhere Geschwindigkeiten weniger geeignet.

Aus der EP 0 589 865 A1 ist ein gattungsgemäßes Triebdrehgestell bekannt. Bei diesem treibt ein Motor die Radsatzachse über eine Hohlwelle an, indem das Ritzel des Motors unmittelbar mit einem Großrad kämmt, welches auf der Hohlwelle sitzt. Auf der dem Motor in Fahrtrichtung gegenüberliegenden Seite der Hohlwelle ist eine mechanische Bremseinrichtung vorgesehen. Diese umfasst eine Bremswelle mit Bremsscheiben. Die Bremswelle wird über ein Zahnrad angetrieben, das unmittelbar mit dem Großrad dem Motorwelle kämmt.

Der Durchmesser des Zahnrades der Bremswelle entspricht dabei etwa dem Durchmesser des Motorritzels. Dies bedingt, dass die Bremsscheiben in etwa mit der hohen Drehzahl des Motors rotieren. Bei höheren Geschwindigkeiten wirken infolge der hohen Drehzahl hohe fliehkraftbedingte Eigenbelastungen der Bremsscheiben. Wegen der Berstgefahr bei hohen Drehzahlen können die Bremsscheiben aus Sicherheitsgründen daher nur vergleichsweise klein dimensioniert werden, was eine geringe Bremsleistung mit sich bringt. Dies hat zur Folge, dass sich dieses Triebdrehgestell nur eingeschränkt für einen Hochgeschwindigkeitseinsatz eignet.

Ein weiterer Nachteil dieses Triebdrehgestells liegt in dem Umstand, dass die Anordnung aus Antriebs- und Bremseinrichtung in Längsrichtung des Fahrzeugs in zu beiden Seiten der Radeinheit Bauraum benötigt, wodurch das Drehgestell insgesamt Längsrichtung des Fahrzeugs einen vergleichsweise großen Bauraum beansprucht.

Aus der DE 1 806 820 A1 ist weiterhin eine Antriebseinheit für Schienentriebfahrzeuge bekannt, bei der auf der Motorwelle an der dem Motorritzel abgewandten Seite des Motors eine Bremsscheibe einer Bremseinrichtung sitzt. Auch hier ergeben sich wiederum wegen der hohen Drehzahl der Bremsscheibe die oben beschriebenen Nachteile im Hochgeschwindigkeitseinsatz.

Der vorliegenden Erfindung liegt daher die Aufgabe zu Grunde, ein gattungsgemäßes Triebdrehgestell zur Verfügung zu stellen, welches die oben genannten Nachteile nicht oder zumindest in geringerem Maße aufweist und insbesondere eine einfache und Platz sparende Konfiguration sicherstellt, die side für den Hochgeschwindigkeitseinsatz eignet.

Die vorliegende Erfindung löst diese Aufgabe ausgehend von einem Triebdrehgestell gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man bei einem Triebdrehgestell gemäß dem Oberbegriff des Anspruchs 1 eine besonders einfache und Platz sparende Konfiguration erzielt, wenn das Getriebe ein mit dem Motor verbundenes Antriebsritzel, ein mit den Radeinheiten verbundenes Großrad und wenigstens ein zwischen dem Antriebsritzel und dem Großrad angeordnetes Zwischenrad aufweist. Die Bremseinrichtung ist dann mit dem Zwischenrad verbunden. Durch diese Konfiguration ergeben sich folgende Vorteile. So ermöglicht das Zwischenrad in einfacher Weise eine Anpassung des, Getriebes an den vorgegebenen Abstand zwischen der Motorwelle und der Welle, über welche die Radeinheiten angetrieben werden. Zum anderen ist es über das Zwischenrad möglich, die Drehzahl der Bremswelle entsprechend einzustellen, sodass sich diese bei maximaler Geschwindigkeit des Fahrzeugs insbesondere im Hinblick auf die zulässigen Drehzahlen der Bremsscheibe im zulässigen Bereich befindet.

Da die Antriebseinrichtung an der Rahmeneinrichtung angeordnet ist, muss im Wagenkasten für die Antriebseinrichtung kein Bauraum mehr vorgehalten werden. Vielmehr kann der Wagenkasten in vorteilhafter Weise frei für andere Zwecke genutzt werden.

Es hat sich gezeigt, dass auf Grund der Anordnung der Antriebseinrichtung an der Rahmeneinrichtung eine entsprechend klein bauende Gestaltung der Antriebseinrichtung realisierbar ist, welche die Unterbringung der Antriebseinrichtung im Triebdrehgestell selbst erst ermöglicht. Die hierzu erforderliche Platzersparnis lässt sich dabei zu einem großen Anteil durch die sich deutlich einfacher gestaltende Leistungsübertragung vom Motor auf die Radeinheiten erzielen. So kann nicht zuletzt auf Grund der geringeren zu überbrückenden Wege zwischen dem Motor und den Radeinheiten beispielsweise ein deutlich einfacher gestaltetes Getriebe verwendet werden.

Die vorliegende Erfindung lässt sich grundsätzlich im Zusammenhang mit beliebig gestalteten Triebdrehgestellen einsetzen, insbesondere im Zusammenhang mit beliebig gestalteten Triebdrehgestellen, bei denen entsprechend beengte Bauraumverhältnisse vorliegen, wie dies beispielsweise bei Schmalspurbahnen der Fall ist. Besonders vorteilhaft gestaltet sich dies im Zusammenhang mit Schienenfahrzeugen mit veränderbarer Spurweite, bei denen die Radeinheiten zur Verstellung der Spurweite entlang ihrer Achse zueinander verschiebbar ausgebildet sind.

Der Motor der Antriebseinrichtung kann dabei grundsätzlich in beliebiger Weise angeordnet sein. So kann der Motor beispielsweise längs angeordnet sein, d. h. die Motorachse kann in einer vertikalen Ebene angeordnet sein, die im wesentlichen parallel zur Fahrzeuglängsachse verläuft.

Eine besonders einfache und Platz sparende Konfiguration ergibt sich bei bevorzugten Ausgestaltungen des erfindungsgemäßen Triebdrehgestells, bei denen der Motor quer zur Fahrzeuglängsachse angeordnet ist. Bevorzugt ist die Motorachse dabei in einer vertikalen Ebene angeordnet, die im wesentlichen senkrecht zur Fahrzeuglängsachse verläuft. Hierdurch wird nicht nur der in Fahrzeuglängsrichtung in der Regel ohnehin begrenzte Bauraum gering gehalten. Es vereinfacht sich zudem die Gestaltung des erforderlichen Getriebes. So kann bei einer solchen Konfiguration ein einfaches Stirnradgetriebe verwendet werden, welches sich wiederum durch einen im Vergleich mit anderen Getrieben geringen erforderlichen Bauraum auszeichnet.

Die Antriebseinrichtung kann in Abhängigkeit von der Verwendung des Triebdrehgestells grundsätzlich ohne entsprechende Federung und Dämpfung an der Rahmeneinrichtung angeordnet sein. So kann sie beispielsweise ohne entsprechende Schwingungsdämpfungseinrichtungen unmittelbar mit den Radeinheiten verbunden sein. So könnte sie beispielsweise unmittelbar an einer die Radeinheiten verbindenden Achsbrücke angeordnet sein.

Gerade im Hinblick auf Hochgeschwindigkeitsanwendungen, bei denen die ungefederten und ungedämpften Massen im Hinblick auf die Laufstabilität des Fahrzeugs möglichst gering gehalten werden müssen, ist bei vorteilhaften Varianten des erfindungsgemäßen Triebdrehgestells vorgesehen, dass die Antriebseinrichtung über wenigstens eine Schwingungsdämpfungseinrichtung an der Rahmeneinrichtung abgestützt ist. Hierbei können grundsätzlich beliebige bekannte elastische Schwingungsdämpfungseinrichtungen verwendet werden.

Die Ausrichtung und Führung der Radeinheiten relativ zueinander kann in beliebiger Weise sichergestellt sein. So sind beispielsweise aus der EP 0 770 013 B1, deren Offenbarungsgehalt hier durch Bezugnahme eingeschlossen werden soll, eine Reihe von Möglichkeiten für eine solche Führung der Radeinheiten zueinander bekannt. Auf besonders einfache Weise wird diese Führung bei bevorzugten Varianten des erfindungsgemäßen Triebdrehgestells realisiert, bei denen die Rahmeneinrichtung eine an sich bekannte Achsbrückeneinheit, an der die Radeinheiten verschiebbar angeordnet sind, und eine darauf abgestützte Rahmeneinheit umfasst. Eine solche Achsbrückeneinheit, wie sie grundsätzlich aus dem eingangs genannten Artikel bekannt ist, dessen Offenbarungsgehalt hier ebenfalls durch Bezugnahme eingeschlossen werden soll, übernimmt dann in bekannter Weise letztlich sämtliche Funktionen einer gemeinsamen Welle der Radeinheiten mit Ausnahme der Drehmomentübertragung.

Wie bereits oben erwähnt, kann die Antriebseinrichtung grundsätzlich ohne entsprechende Schwingungsdämpfungseinrichtungen direkt an der Achsbrückeneinheit befestigt sein. Vorzugsweise geschieht dies jedoch zumindest unter Zwischenschaltung einer entsprechenden Schwingungsdämpfungseinrichtung. Weiter vorzugsweise ist die Antriebseinrichtung jedoch an der Rahmeneinheit abgestützt. Schon allein durch die in der Regel zwischen der Achsbrückeneinheit und der Rahmeneinheit angeordneten Schwingungsdämpfungseinrichtungen, in der Regel so genannte Primärfedern und Primärdämpfer, wird schon eine entsprechende Schwingungsdämpfung erzielt. Die Schwingungsdämpfung kann noch erhöht werden, wenn auch im Bereich der Abstützung der Antriebseinrichtung an der Rahmeneinheit entsprechende Schwingungsdämpfungseinrichtungen vorgesehen sind.

Wie schon bei der Antriebseinrichtung ergibt sich durch die Anordnung der Bremseinrichtung im Bereich der Rahmeneinrichtung auch hier eine Platzersparnis gegenüber den bekannten Lösungen. So wird zum einen kein Bauraum im Bereich des Wagenkastens beansprucht. Zum anderen kann durch diese Anordnung in unmittelbarer Nähe der abzubremsenden Bauelemente auch für die Bremseinrichtung eine entsprechend kompaktere Bauweise gewählt werden, die es unter Umständen erst ermöglicht, die Bremseinrichtung im Bereich der Rahmeneinrichtung anzuordnen..

Die Bremseinrichtung kann dabei grundsätzlich in beliebiger Weise im Bereich der Rahmeneinrichtung befestigt sein. Bevorzugt ist die Bremseinrichtung wie die Antriebseinrichtung an der Rahmeneinrichtung abgestützt. Auf die Bremseinrichtung ist wie schon die Antriebseinrichtung vorzugsweise über wenigstens eine Schwingungsdämpfungseinrichtung gelagert, um die ungedämpfte Masse des Triebdrehgestells möglichst gering zu halten. Bei vorteilhaften, weil besonders einfach gestalteten Varianten ist die Bremseinrichtung mit der Antriebseinrichtung verbunden und zusammen mit dieser entsprechend elastisch abgestützt.

Die Bremseinrichtung kann in beliebiger bekannter Weise gestaltet sein.

Bei bevorzugten, weil besonders einfach gestalteten Varianten umfasst die Bremseinrichtung wenigstens eine Bremsscheibe, die auf einer mit der Antriebseinrichtung verbunden Bremswelle sitzt. Solche Varianten haben gegenüber den Ausführungen mit Radbremsscheiben den Vorteil, dass letztere mit den Rädern verschiebbare Bremszangen benötigen, die unter Umständen einen inakzeptabel großen Freiraum für die verschiebbare Radeinheiten erfordern, welche in der Regel noch Einrichtungen für Spurkranzschmierung und -sanden enthalten. Außerdem verringert sich bei den Varianten ohne Radbremsscheiben der Anteil unabgefederter Masse erheblich. Dies ist gerade im Hochgeschwindigkeitsbereich im Hinblick auf die dort auftretenden laufdynamischen Probleme von Vorteil.

Die vorstehenden Lösungen mit der erfindungsgemäßen Bremseinrichtung vereinen in vorteilhafter Weise die Forderung nach Unterbringung von Antrieb und Bremsanlage im Fahrwerk mit dem geringen im Drehgestell verfügbaren Einbauraum und den komplexen Einbaubedingungen.

Bevorzugt ist die Bremswelle mit dem Getriebe verbunden. Die Verbindung zwischen Bremswelle und Getriebe kann in beliebiger Weise gestaltet sein. Bevorzugt ist die Bremseinrichtung über eine Kupplungseinrichtung mit der Antriebseinrichtung verbunden. Eine solche Kupplungseinrichtung bringt bei entsprechender Gestaltung den Vorteil mit sich, dass sie Winkelfehler und Versatz aufnehmen kann.

Bei vorteilhaften Ausführungen des erfindungsgemäßen Triebdrehgestells ist vorgesehen, dass zumindest die Kupplungseinrichtung im Getriebe integriert ist. Hierdurch ergibt sich eine besonders klein bauende, kompakte Konfiguration, welche die Anordnung der Antriebseinrichtung an der Rahmeneinrichtung in vorteilhafter Weise erleichtert. Vorzugsweise ist auch wenigstens ein Lager der Bremseinrichtung in der Kupplungseinrichtung integriert, da hiermit eine weitere Bauraum- und Gewichtsreduzierung erzielt werden kann.

Es versteht sich, dass je nach den räumlichen Gegebenheiten, gegebenenfalls auch je nach den zulässigen Drehzahlen für die Bremsscheibe, mehrere Zwischenräder vorgesehen sein können.

Weiterhin versteht es sich, dass die Bremseinrichtung zur Einhaltung der zulässigen Drehzahl der Bremsscheibe bei Maximalgeschwindigkeit des Fahrzeugs auch ein entsprechend ausgelegtes Reduktionsgetriebe umfassen kann.

Im übrigen versteht es sich, dass zumindest eine Lagerung der Bremswelle bei einer solchen die Gestaltung dann auch durch die Lagerung des Zwischenrades übernommen werden kann, um eine besonders kompakte Bauweise zu erzielen.

Schließlich versteht es sich, dass mehrere der oben genannten Varianten für die Gestaltung und Anordnung der Bremseinrichtung auch in Kombination miteinander realisiert sein können.

Es sie an dieser Stelle nochmals erwähnt, dass die oben beschriebenen raumsparenden Antriebs- und Bremsanordnungen in ihrer Zeckmäßigkeit nicht auf Triebdrehstelle mit veränderbarer Spurweite beschränkt sind. Vielmehr lassen sie sich in vorteilhafter Weise allgemein bei Triebdrehgestellen mit beengtem Bauraum einsetzen.

Die vorliegende Erfindung betrifft weiterhin ein Schienenfahrzeug mit einem erfindungsgemäßen Triebdrehgestell. Bei einem solchen Schienenfahrzeug lassen sich die oben beschriebenen Gestaltungen in derselben Weise und mit denselben Vorteilen realisieren.

Weitere bevorzugte Ausgestaltungen der Erfindung ergeben sich aus den Unteransprüchen oder der nachstehenden Beschreibung bevorzugter Ausführungsbeispiele, welche auf die beigefügten Zeichnungen Bezug nimmt. Es zeigen:
- Figur 1: eine schematische Draufsicht auf einen Ausschnitt aus einem bevorzugten Ausführungsbeispiel des erfindungsgemäßen Triebdrehgestells;
- Figur 2: eine schematische Draufsicht auf einen Ausschnitt aus einem weiteren bevorzugten Ausführungsbeispiel des erfindungsgemäßen Triebdrehgestells;
- Figur 3: eine schematische Draufsicht auf einen Ausschnitt aus einem anderen Triebdrehgestell.

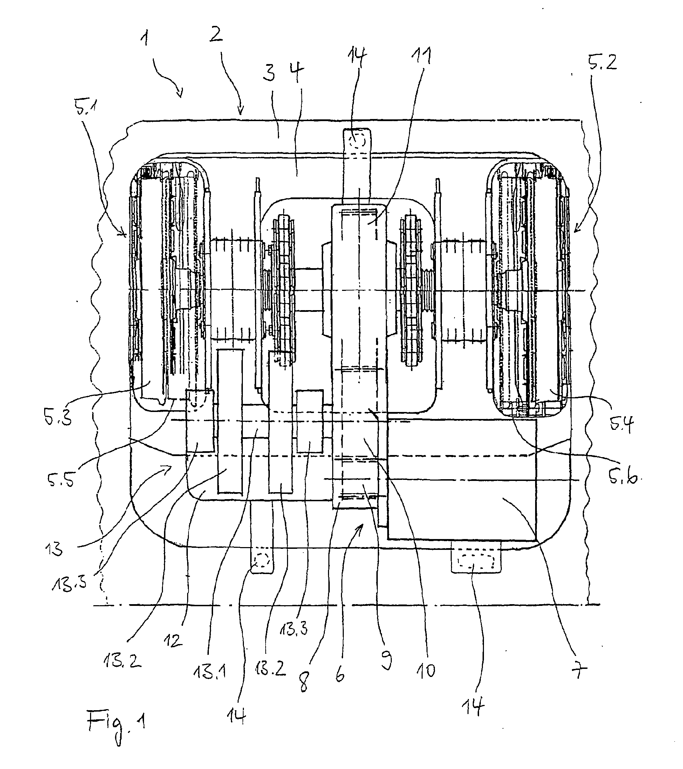

Figur 1 zeigt eine schematische Draufsicht auf einen Ausschnitt aus einem bevorzugten Ausführungsbeispiel des erfindungsgemäßen Triebdrehgestells 1 eines Schienenfahrzeugs mit veränderbarer Spurweite. Das Triebdrehgestell 1 weist eine Rahmeneinrichtung 2 mit einer Rahmeneinheit in Form eines Fahrwerksrahmens 3 und einer Achsbrückeneinheit in Form einer Achsbrücke 4 auf.

Die Achsbrücke 4 stützt sich auf zwei Radeinheiten in Form von Einzelradlaufwerken 5.1 und 5.2 mit Rädern 5.3 und 5.4 ab. Diese sind in Figur 1 in ihrer Stellung mit maximaler Spurweite dargestellt. Zur Verstellung der Spurweite können die Einzelradlaufwerke 5.1 und 5.2 entlang der Radachse verschoben werden, wie dies in Figur 1 durch die gestrichelten Konturen 5.5 und 5.6 angedeutet ist, welche die Stellung der Räder 5.3 und 5.4 bei der minimalen Spurweite andeuten. Bei der Verstellung der Spurweite werden die Lager der Räder 5.3 und 5.4, auf denen sich die Achsbrücke 4 abstützt, entlang der Radachse bezüglich der Achsbrücke 4 verschoben und anschließend in der gewünschten Stellung verriegelt. Die Achsbrücke 4 stellt dabei die korrekte gegenseitige Ausrichtung der beiden Einzelradlaufwerke 5.1 und 5.2 zueinander sicher.

Auf der Achsbrücke 4 stützt sich über - in Figur 1 nicht dargestellte - so genannte Primärfedern der Fahrwerksrahmen 3 ab, auf dem sich wiederum über - in Figur 1 nicht dargestellte - so genannte Sekundärfedern der - in Figur 1 ebenfalls nicht dargestellte - Wagenkasten abstützt.

An der Rahmeneinrichtung 2 ist eine Antriebseinrichtung 6 mit einem Motor 7 und einem daran angeflanschten Getriebe 8 angeordnet. Der quer zur Fahrzeuglängsachse angeordnete Motor 7 treibt über das Getriebe 8 und vorzugsweise als Hohlwellenkupplung mit Bogenverzahnung ausgebildete Kupplungen die Räder 5.3 und 5.4 der verschiebbaren Einzelradlaufwerke 5.1 und 5.2 an.

Das Getriebe 8 ist dank der Anordnung des Motors 7 quer zur Fahrzeuglängsachse als einfaches Stirnradgetriebe mit einem auf der Motorwelle sitzenden Antriebsritzel 9, einem Zwischenrad 10 und einem Großrad 11 ausgebildet. Durch diese einfache Gestaltung des Getriebes 8 und die Anordnung des Motors 7 an der Rahmeneinrichtung 2 ist die dargestellte besonders kompakte Gestaltung realisierbar, welche die Integration der Antriebseinrichtung 6 in das Triebdrehgestell 1 ohne weiteres ermöglicht.

An dem Gehäuse des Getriebes 8 ist weiterhin ein Träger 12 befestigt, der eine mechanische Bremseinrichtung 13 trägt. Die Bremseinrichtung 13 umfasst dabei eine mit dem Zwischenrad 10 des Getriebes 8 gekoppelte Bremswelle 13.1, auf der zwei Bremsscheiben 13.2 sitzen. Die Bremswelle 13.1 ist über zwei Lagereinheiten 13.3 an dem Träger 12 gelagert. An dem Träger 12 sind weiterhin die mit den Bremsscheiben 13.2 zusammenwirkenden Bremsbacken angeordnet, die aus Gründen der Übersichtlichkeit in Figur 1 nicht dargestellt. sind.

Die Kupplungseinrichtung zwischen der Bremswelle 13.1 und dem Zwischenrad 10 ist im Getriebe 8 integriert, wodurch eine besonders kompakte Anordnung realisiert wird. Es versteht sich, dass bei anderen Ausführungsformen auch noch die getriebenahe Lagerstelle der Bremswelle im Getriebe integriert sein kann, wodurch sich eine noch kompaktere Anordnung realisieren lässt.

Durch den unmittelbaren Anschluss der Bremseinrichtung 13 an die Antriebseinrichtung 6 wird die Kompaktheit der gesamten Anordnung weiter erhöht, sodass man hiermit eine besonders Platz sparende, einfach in das Triebdrehgestell zu integrierende Konfiguration erhält.

Um die unabgefederte und ungedämpfte Masse des Triebdrehgestells 1 möglichst gering zu halten ist die Einheit aus Antriebseinrichtung 6 und Bremseinrichtung 13 über entsprechende - in Figur 1 schematisch dargestellte - Schwingungsdämpfungseinrichtungen in Form entsprechender Feder-Dämpfer-Elemente 14 an dem Fahrwerksrahmen 3 abgestützt. Wie Figur 1 zu entnehmen ist, ist die Aufhängung der Einheit aus Antriebseinrichtung 6 und Bremseinrichtung 13 dabei nach Art einer Dreipunktaufhängung ausgebildet.

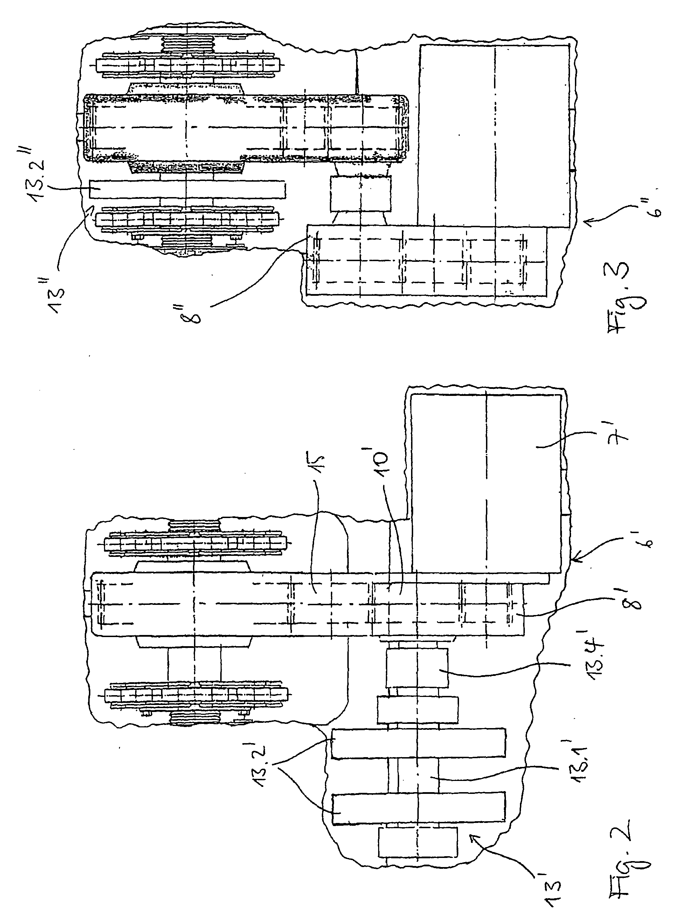

Figur 2 zeigt eine schematische Draufsicht auf einen Ausschnitt aus einem weiteren bevorzugten Ausführungsbeispiel des erfindungsgemäßen Triebdrehgestells. Diese Ausführung gleicht in ihrem grundsätzlichen Aufbau derjenigen aus Figur 1, sodass hier.lediglich auf die Unterschiede eingegangen werden soll.

Ein Unterschied besteht darin, dass die Kupplungseinrichtung 13.4', mit der die Bremswelle 13.1' und damit die Bremsscheiben 13.2' an das Zwischenrad 10' gekoppelt sind, nicht im Getriebe 8' integriert ist, sondern außerhalb des Gehäuses des Getriebes 8' angeordnet ist. Die Kupplungseinrichtung 13.4' ist dabei so ausgeführt, dass sie Längs- und Winkelversätz zwischen dem Zwischenrad 10' und der Bremswelle 13.1' ausgleichen kann.

Ein weiterer Unterschied zur Ausführung aus Figur 1 besteht darin, dass das Getriebe 8' der Antriebseinrichtung 6' ein weiteres Zwischenrad 15 aufweist, wodurch in Längsrichtung des Fahrzeugs in einfacher Weise ein größerer axialer Abstand zwischen dem Motor 7' und den - in Figur zwei nicht dargestellten - Radeinheiten erzielt werden kann.

Figur 3 zeigt eine schematische Draufsicht auf einen Ausschnitt aus einem nicht erfindungsgemäßen Triebdrehgestell. Auch dieses gleicht in seinem grundsätzlichen Aufbau dem jenigen aus Figur 1, sodass hier lediglich auf die Unterschiede eingegangen werden soll.

Ein Unterschied besteht in der abweichenden Gestaltung des Getriebes 8'' der Antriebseinrichtung 6'', mit der eine quer zur Fahrzeuglängsachse besonders kompakte Konfiguration erzielt werden kann.

Ein weiterer Unterschied besteht in der Gestaltung der Bremseinrichtung 13'', die eine unmittelbar im Bereich der - in Figur 3 nicht dargestellten - Radeinheiten angeordnete und auf diese wirkende Bremsscheiben 13.2'' umfasst.

Die vorliegende Erfindung wurde vorstehen ausschließlich anhand von Ausführungsbeispielen mit veränderbarer Spurweite beschreiben. Es versteht sich jedoch, dass die Erfindung - gerade bei ähnlich beengten Bauraumverhältnissen - auch im Zusammenhang mit beliebig gestalteten Triebdrehgestellen ohne veränderbare Spurweite eingesetzt werden kann. Hierbei können die beiden Radeinheiten dann in bekannter Weise auch ein angetriebenes herkömmliches Radpaar oder dergleichen bilden.

## Patentansprüche

1. Triebdrehgestell für ein Schienenfahrzeug, insbesondere ein Schienenfahrzeug mit veränderbarer Spurweite, mit einer Rahmeneinrichtung (2) und wenigstens zwei durch eine Antriebseinrichtung (6; 6') angetriebenen Radeinheiten (5.1, 5.2), an denen die Rahmeneinrichtung (2) abgestützt ist, wobei die Antriebseinrichtung (6; 6') an der Rahmeneinrichtung (2) angeordnet ist und einen Motor (7; 7') sowie ein damit verbundenes Getriebe (8; 8') umfasst, und wobei eine im Bereich der Rahmeneinrichtung (2) angeordnete mechanische Bremseinrichtung (13; 13') vorgesehen ist, **dadurch gekennzeichnet, dass** das Getriebe (8; 8') ein mit dem Motor verbundenes Antriebsritzel (9), ein mit den Radeinheiten (5.1, 5.2) verbundenes Großrad (11) und wenigstens ein zwischen dem Antriebsritzel (9) und dem Großrad (11) angeordnetes Zwischenrad (10; 10') aufweist, mit dem die Bremseinrichtung (13; 13') verbunden ist.

2. Triebdrehgestell nach Anspruch 1, **dadurch gekennzeichnet, dass** die Bremseinrichtung (13; 13') an der Rahmeneinrichtung (2) abgestützt ist.

3. Triebdrehgestell nach Anspruch 1 oder 2**, dadurch gekennzeichnet, dass** die Bremseinrichtung (13; 13') wenigstens eine Bremsscheibe (13.2; 13.2') umfasst, die auf einer mit dem Zwischenrad (10, 10') verbunden Bremswelle sitzt.

4. Triebdrehgestell nach einem der Ansprüche 1 bis 3, **dadurch gekennzeichnet, dass** die Bremseinrichtung (13; 13') über eine Kupplungseinrichtung (13.4') mit dem Zwischenrad (10, 10') verbunden ist.

5. Triebdrehgestell nach Anspruch 4, **dadurch gekennzeichnet, dass** zumindest die Kupplungseinrichtung im Getriebe (8) integriert ist.

6. Triebdrehgestell nach einem der vorhergehenden Ansprüche, **dadurch gekennzeichnet, dass** die Radeinheiten (5.1, 5.2) zur Verstellung der Spurweite entlang ihrer Achse zueinander verschiebbar ausgebildet sind.

7. Triebdrehgestell nach einem der vorhergehenden Ansprüche, **dadurch gekennzeichnet, dass** der Motor (7; 7') quer zur Fahrzeuglängsachse angeordnet ist.

8. Triebdrehgestell nach einem der vorhergehenden Ansprüche, **dadurch gekennzeichnet, dass** die Antriebseinrichtung (6; 6') über wenigstens eine Schwingungsdämpfungseinrichtung (14) an der Rahmeneinrichtung (2) abgestützt ist.

9. Triebdrehgestell nach einem der vorhergehenden Ansprüche, **dadurch gekennzeichnet, dass** die Rahmeneinrichtung (2) eine Rahmeneinheit (3) und eine diese abstützende Achsbrückeneinheit (4) umfasst, an der die Radeinheiten (5.1, 5.2) verschiebbar angeordnet sind.

10. Triebdrehgestell nach Anspruch 9, **dadurch gekennzeichnet, dass** die Antriebseinrichtung (6; 6') an der Rahmeneinheit (3) abgestützt ist.

11. Schienenfahrzeug mit einem Triebdrehgestell (1) nach einem der vorhergehenden Ansprüche.

## Claims

1. Motorised bogie for a rail vehicle, in particular a rail vehicle with changeable gauge, with a frame device (2) and at least two wheel units (5.1, 5.2) driven by a drive device (6; 6'), on which the frame device (2) is supported, wherein the drive device (6; 6') is arranged on the frame device (2) and comprises a motor (7; 7') and a gearing (8; 8') connected thereto, and wherein a mechanical brake device (13; 13') is provided, that is arranged in the area of the frame devie (2), **characterised in that** the gearing (8; 8') has a drive pinion (9) connected to the motor, a large wheel (11) connected to the wheel units (5.1, 5.2) and at least one intermediate wheel (10; 10') being arranged between the drive pinion (9) and the large wheel (11) and being connected to the brake device (13; 13').

2. Motorised bogie according to Claim 1, **characterised in that** the brake device (13; 13') is supported on the frame device (2).

3. Motorised bogie according to Claim 1 or 2, **characterised in that** the brake device (13; 13') comprises at least one brake disk (13.2; 13.2'), which is located on a brake shaft connected to the intermediate wheel (10; 10').

4. Motorised bogie according to any one of Claims 1 to 3, **characterised in that** the brake device (13; 13') is connected to the intermediate wheel (10; 10') by means of a clutch device (13.4').

5. Motorised bogie according to Claim 4, **characterised in that** at least the clutch device is integrated in the gearing (8).

6. Motorised bogie according to any one of the preceding claims, **characterised in that** the wheel units (5.1, 5.2) are designed such as to be capable of being shifted along their axle in order to adjust the gauge.

7. Motorised bogie according to any one of the preceding claims, **characterised in that** the motor (7; 7') is arranged transverse to the longitudinal axis of the vehicle.

8. Motorised bogie according to any one of the preceding claims, **characterised in that** the drive device (6; 6') is supported on the frame device (2) by means of at least one vibration damping device (14).

9. Motorised bogie according to any one of the preceding claims, **characterised in that** the frame device (2) comprises a frame unit (3) and an axle bridge unit (4) supporting the former, on which the wheel units (5.1, 5.2) are arranged such as to be capable of being shifted.

10. Motorised bogie according to Claim 9, **characterised in that** the drive device (6; 6') is supported on the frame unit (3).

11. Rail vehicle having a motorised bogie (1) according to any one of the preceding claims.

## Revendications

1. Bogie moteur pour véhicule ferroviaire, en particulier un véhicule ferroviaire à écartement variable, comprenant un dispositif de châssis (2) et au moins deux unités de roue (5.1, 5.2) entraînées par un dispositif d'entraînement (6 ; 6'), sur lesquelles le dispositif de châssis (2) est appuyé, le dispositif d'entraînement (6 ; 6') étant disposé au dispositif de châssis (2) et comportant un moteur (7 ; 7') et un engrenage (8 ; 8') connecté à celui-ci, et un dispositif de freinage mécanique (13 ; 13') disposé dans la zone du dispositif de châssis (2) étant prévu, **caractérisé en ce que** l'engrenage (8 ; 8') comporte un pignon d'entraînement (9) connecté au moteur, une grande roue (11) connectée aux unités de roue (5.1, 5.2) et au moins une roue intermédiaire (10 ; 10') étant disposée entre le pignon d'entraînement (9) et la grande roue (11) et étant connecté au dispositif de freinage (13 ; 1 ') y.

2. Bogie moteur selon la revendication 1, **caractérisé en ce que** le dispositif de freinage (13 ; 13') est appuyé sur le dispositif de châssis (2).

3. Bogie moteur selon la revendication 1 ou la revendication 2, **caractérisé en ce que** le dispositif de freinage (13 ; 13') comporte au moins un disque de frein (13.2 ; 13.2') qui est situé sur un arbre de frein connecté à la roue intermédiaire (10 ; 10').

4. Bogie moteur selon l'une quelconque des revendications 1 à 3, **caractérisé en ce que** le dispositif de freinage (13 ; 13') est connecté à la roue intermédiaire (10 ; 10') par un dispositif d'accouplement (13.4').

5. Bogie moteur selon la revendication 4, **caractérisé en ce qu'**au moins le dispositif d'accouplement est intégré dans l'engrenage (8).

6. Bogie moteur selon l'une quelconque des revendications précédentes, **caractérisé en ce que** les unités de roue (5.1, 5.2) sont conçues de telle manière à pouvoir être déplacées le long de leur essieu à des fins d'ajustement de l'écartement.

7. Bogie moteur selon l'une quelconque des revendications précédentes, **caractérisé en ce que** le moteur (7 ; 7') est disposé de manière transversale par rapport à l'axe longitudinal du véhicule.

8. Bogie moteur selon l'une quelconque des revendications précédentes, **caractérisé en ce que** le dispositif d'entraînement (6 ; 6') est appuyé sur le dispositif de châssis (2) par au moins un dispositif d'amortissement de vibrations (14).

9. Bogie moteur selon l'une quelconque des revendications précédentés, **caractérisé en ce que** le dispositif de châssis (2) comporte une unité de châssis (3) et une unité de pont d'essieu (4) appuyant celle-ci, les unités de roue (5.1, 5.2) y étant disposées de telle manière à pouvoir être déplacées.

10. Bogie moteur selon la revendication 9, **caractérisé en ce que** le dispositif d'entraînement (6 ; 6') est appuyé sur l'unité de châssis (3).

11. Véhicule ferroviaire ayant un bogie moteur (1) selon l'une quelconque des revendications précédentes.
